# EUROPEAN PATENT SPECIFICATION

(11) **EP 3 309 361 B1**
(45) Date of publication and mention of the grant of the patent: **27.10.2021**
(21) Application number: 17193438.3
(22) Date of filing: 27.09.2017
(51) Int. Cl.: F01D 11/00, F16J 15/08, F01D 25/24

(54) **SEAL, CORRESPONDING ENGINE SECTION AND GAS TURBINE ENGINE**
DICHTUNG, ZUGEHÖRIGER TRIEBWERKSABSCHNITT UND GASTURBINENTRIEBWERK
JOINT, SECTION DE MOTEUR ET MOTEUR À TURBINE À GAZ ASSOCIÉS

(30) Priority: 12.10.2016 US 201615291650
(43) Date of publication of application: 18.04.2018
(73) Proprietor: Raytheon Technologies Corporation, Farmington, CT 06032 (US)
(72) Inventor: Galle, Nathan K, Portland, ME 04102 (US)
(74) Representative: Dehns

(56) References cited:
- EP-A1- 1 045 959
- EP-A1- 1 046 002
- EP-A1- 2 949 874
- EP-A1- 3 051 071
- EP-A1- 3 211 181
- EP-A1- 3 246 534
- EP-A1- 3 252 275
- US-A- 3 012 802
- US-A1- 2016 115 807
- US-B1- 6 227 546
- Merriam-Webster Incorporated ET AL: ""Adjacent": definition and synonyms" In: "Merriam-Webster's Collegiate Dictionary: Eleventh Edition", 30 July 2013 (2013-07-30), Merriam-Webster, Incorporated, Springfield, MA , USA, XP055450688, ISBN: 978-0-87779-807-1 pages 16-16, * left-hand column, paragraph 10 *

## Description

### FIELD

The present invention relates to seals and, more specifically, to a seal for a gas turbine engine, an engine section of a gas turbine engine and a gas turbine engine.

### BACKGROUND

A gas turbine engine typically includes a fan section, a compressor section, a combustor section, and a turbine section. Air moves into the engine through the fan section. Airfoil arrays in the compressor section rotate to compress the air, which is then mixed with fuel and combusted in the combustor section. The products of combustion are expanded to rotatably drive airfoil arrays in the turbine section. Rotating the airfoil arrays in the turbine section drives rotation of the fan and compressor sections. The compressor section and turbine section each have multiple stages of blades that rotate about a central axis and multiple stages of vanes that are stationary relative to the central axis.

Gas turbine engines may have various gas-flow streams that may be kept separate from one another. The gas-flow streams may be separated by various components. The internal engine environment is exposed to temperature and pressure extremes and other harsh environmental conditions, which may affect the integrity of the components separating different gas-flow streams. Higher pressure gaspath air may tend to leak between airfoil arrays into lower pressure gaspaths. Seals may be included between the components to minimize leakage. Seal degradation may contribute to loss of performance and/or efficiency of the gas turbine engine.

EP 3 051 071 A1 discloses a seal for a turbine shroud, wherein the seal is engaged with surfaces of a metallic carrier and a blade track to block ingress of hot gases at the interface of the blade track and the metallic carrier.

US 2016/0115807 A1 discloses a seal including a plurality of seal sections including convolutions therein that are inter-engaged with one another to form flexible and resilient seals.

EP 2 949 874 A1 discloses a seal assembly including a first wall and a second wall which may be convoluted and resiliently compressed between two substantially opposing surfaces.

EP 1 045 959 A1 discloses a seal including first and second axially opposite loops integrally joined together by a coextensive web in a collective ring having a circumferential split.

EP 1 046 002 A1 discloses a seal including a seal ring with a circumferential split defining a gap.

### SUMMARY

From a first aspect of the invention, a seal for a gas turbine engine as claimed in claim 1 is provided.

In various embodiments, the first ply and the second ply comprise a "W" seal. The second ply may be nested within the first ply with an inner diameter surface of the second ply in contact with the surface of the first ply. The third ply may have a circumferentially discontinuous annular shape. The first ply may comprise a first sheet metal and the second ply may comprise a second sheet metal. The first ply may be comprised of a first material and the second ply may be comprised of a second material. At least one of the first material or the second material may comprise a nickel-based alloy. The first material and the second material may comprise the same material.

From a further aspect of the invention, an engine section of a gas turbine engine as claimed in claim 10 is also provided. In various embodiments, the first ply and the second ply comprise a "W" seal. The second ply may be nested within the first ply with an inner diameter surface of the second ply in contact with the surface of the first ply. The second ply may be mechanically loaded against the surface of the first ply. The first ply may be comprised of a first material and the second ply may be comprised of a second material. The first material and the second material may comprise the same material. At least one of the first material or the second material may comprise a nickel-based alloy. The second material may have a greater wear resistance than the first material. The first ply may comprise a first sheet metal and the second ply may comprise a second sheet metal.

From a further aspect of the invention, a gas turbine engine as claimed in claim 13 is also provided.

In various embodiments, the first ply and the second ply comprise a "W" seal. The second ply may be nested within the first ply with an inner diameter surface of the second ply in contact with the surface of the first ply. The second ply may be mechanically loaded against the surface of the first ply. The first ply may be comprised of a first material and the second ply may be comprised of a second material. At least one of the first material or the second material may comprise a nickel-based alloy.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present invention is particularly pointed out and distinctly claimed in the concluding portion of the specification. A more complete understanding of the present invention, however, may best be obtained by referring to the detailed description and claims when considered in connection with the figures, wherein like numerals denote like elements.
FIG. 1 illustrates a schematic cross-section of a gas turbine engine, in accordance with various embodiments;
FIG. 2A illustrates a schematic cross-section of an engine section of the gas turbine engine of FIG. 1, in accordance with various embodiments;
FIGS. 2B illustrate an enlarged view of the engine section with a seal between engine components, in accordance with various embodiments;
FIGS. 3A and 3B illustrate a cross-sectional view of seal configurations, in accordance with various embodiments, wherein the embodiment of Figure 3A does not fall within the scope of the invention; and
FIGS. 4A and 4B illustrate an axial view of seal configurations, in accordance with various embodiments which do not fall within the scope of the invention.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that logical, chemical, and mechanical changes may be made without departing from the scope of the invention as set forth in the appended claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine.

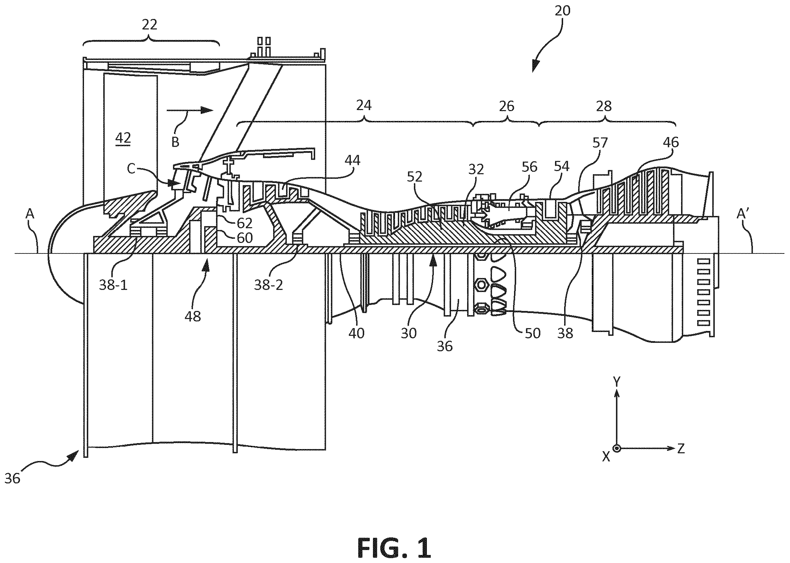

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a bypass flow-path B while compressor section 24 can drive coolant along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present invention contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

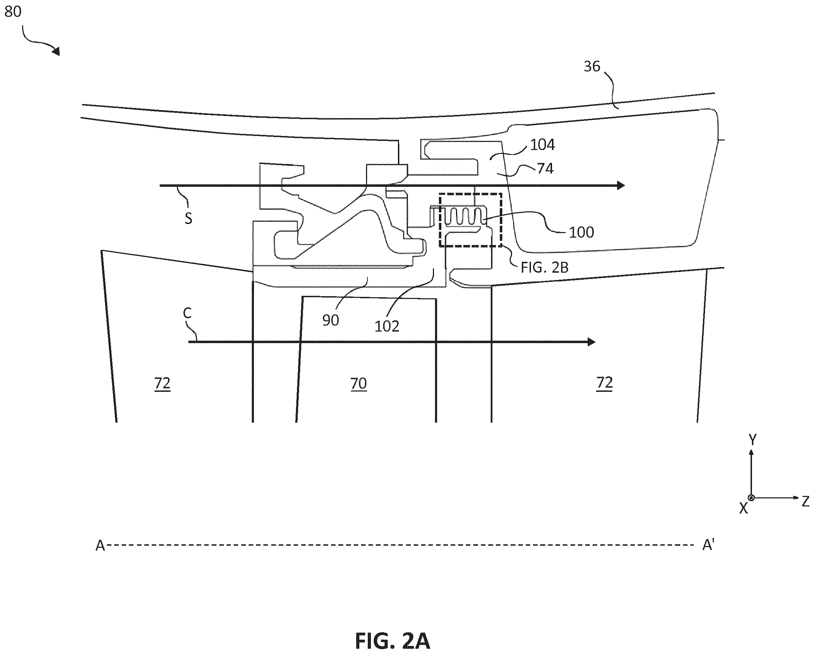

Referring now to FIG. 1 and to FIG. 2A, according to various embodiments, each of low pressure compressor 44, high pressure compressor 52, low pressure turbine 46, and high pressure turbine 54 in gas turbine engine 20 may comprise one or more stages or sets of rotating blades ("rotors blades") and one or more stages or sets of stationary vanes ("stator vanes") axially interspersed with the associated blade stages but non-rotating about engine central longitudinal axis A-A'. Each compressor stage and turbine stage may comprise multiple interspersed stages of blades 70 and vanes 72. The blades 70 rotate about engine central longitudinal axis A-A', while the vanes 72 remain stationary about engine central longitudinal axis A-A'. For example, FIG. 2A schematically shows, by example, a portion of an engine section 80, which is illustrated as a turbine section 28 of gas turbine engine 20.

With reference to FIG. 2A, a portion of engine section 80 is illustrated, in accordance with various embodiments. Engine section 80 may include a circumferential array of blades 70 configured to rotate about engine central longitudinal axis A-A'. Upstream (forward) and downstream (aft) of blade 70 is a circumferential arrays of vanes 72 configured to guide core airflow C flow through the engine section 80. Vane 72 may include an outer diameter platform 74 coupled to engine case structure 36. Outer diameter platform 74 may be coupled to or integral with vane 72.

In various embodiments, engine section 80 may include stationary annular fluid seals, referred to as a blade outer air seal (BOAS) assembly, circumscribing the blades 70 and defining a radially outward boundary of core airflow path C. A BOAS assembly may include one or more BOAS segments 90 circumferentially arranged to form an annular ring about engine central longitudinal axis A-A' radially outward of blades 70. BOAS segments 90 may be disposed axially adjacent with respect to vanes 72. During engine operation, vanes 72 and BOAS segments 90 are subjected to different thermal loads and environmental conditions. Cooling air may be provided to BOAS segment 90 and vanes 72 to enable operation of the turbine during exposure to hot combustion gasses produced within the combustion area, as described above. Pressurized air may be diverted from other engine sections as a secondary airflow S and used to cool components within engine section 80. A BOAS segment 90 and vanes 72 may define an inner diameter boundary of secondary airflow S, and engine case structure 36 may define an outer diameter boundary of secondary airflow S. Secondary airflow S may have a higher pressure than core airflow C. A difference in pressure of secondary airflow S may typically be about 100 to 200 pounds per square inch (psi), or 689 to 1379 kilopascals (kPa), greater than core airflow C, producing a tendency for secondary airflow S to leak into core airflow C. One or more seals 100 may therefore be incorporated between stages of BOAS segment 90 and vanes 72 to reduce leakage of cooling air from secondary airflow S into core airflow C. Seal 100 may comprise an annular seal disposed between BOAS segment 90 and vane 72.

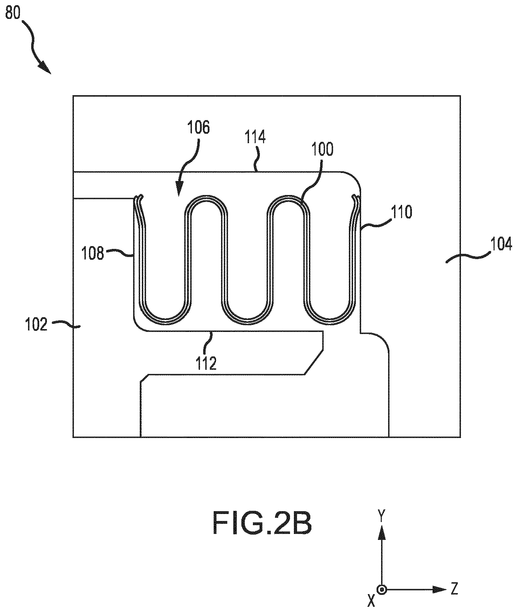

With reference to FIG. 2B, a portion of an engine section 80 having a seal 100 is shown, in accordance with various embodiments. Seal 100 may be disposed between adjacent engine components, such as a first engine component 102 and a second engine component 104. The first engine component 102 and second engine component 104 may comprise any stationary or rotating engine component. For example, the first engine component 102 may include a BOAS segment 90 and the second engine component 104 may include a vane 72 or outer diameter platform 74 (see FIG. 2A). First engine component 102 and second engine component 104 may be define a cavity 106 therebetween.

In various embodiments, at least a portion of seal 100 may include a continuous annular ring extending circumferentially within cavity 106 around of engine section 80. Cavity 106 may expand and contract (axially and/or radially) in response to the thermal and/or mechanical environment of engine section 80. With a continuous ring portion, seal 100 provides a hoop stiffness, which may reduce the loading of seal 100 against a surface 112 at the inner diameter of seal 100 or against a surface 114 at the outer diameter of seal 100. Seal 100 may be disposed within cavity 106 and may generally be free-floating within cavity 106. Seal 100 may be a "W" seal (e.g. a seal having a "W"-shaped cross-section or that form a "W" shape). A "W" seal may be flexible enough axially to expand and seal against the walls of first engine component 102 and a second engine component. Seal 100 may be biased outwardly along engine central longitudinal axis A-A' to contact aft surface 108 of first engine component 102 and forward surface 110 of second engine component 104. The "W" shape may enable seal 100 to compress and extend as first engine component 102 moves relative to second engine component 104 in response to thermally driven deformations and pressure loads. Thus, seal 100 prevents or reduces leakage airflow passing through cavity 106.

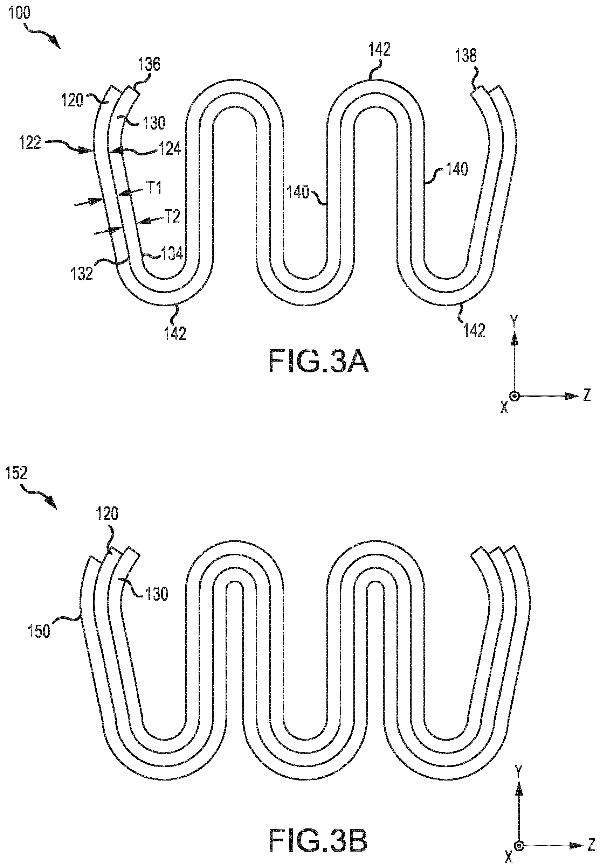

With reference to FIG. 3A, a cross-section of seal 100 is shown, in accordance with various embodiments that do not fall within the scope of the invention. Seal 100 may include two or more layers or plies of material, such as first ply 120 and second ply 130. Second ply 130 is positioned directly adjacent to first ply 120 and may be generally in contact with first ply 120. In various embodiments, second ply 130 may be nested within first ply 120 and at least a portion of first ply 120 may be in contact with second ply 130. On one hand, in accordance with the scope of the invention, an inner diameter surface 132 of second ply 130 may be in contact with an outer diameter surface 124 of first ply 120. Seal 100 may include a full hoop portion that extends circumferentially within engine section 80. In various embodiments, first ply 120 may be a full hoop and second ply 130 may be a split hoop. As a split hoop, second ply 130 may be easily coupled with first ply 120. Second ply 130 may be mechanically loaded against an outer diameter surface 124 of first ply 120. On the other hand, still in accordance with the scope of the invention, second ply 130 may be positioned with an outer diameter surface 134 of second ply 130 directly adjacent to an inner diameter surface 122 of first ply 120. In accordance with the scope of the invention, seal 100 comprises one or more layers or plies in addition to first ply 120 and second ply 130, such as a third ply 150 as illustrated, for example, by seal 152 in FIG. 3B. First ply 120 may be formed as a separate component from second ply 130 and as a separate component from additional plies, such as third ply 150. Seal 100 may be subsequently assembled by positioning second ply 130 adjacent to and nested with first ply 120.

With reference to FIG. 3B, a cross-section of seal 152 is shown, in accordance with the scope of the invention. Seal 152 does include multiple layers or plies of material, according to the scope of the invention as first ply 120, second ply 130 and third ply 150. First ply (120) has a circumferentially continuous annular shape. Third ply 150 is positioned directly adjacent to at least one of first ply 120 and second ply 130. Third ply 150 may have a circumferentially discontinuous annular shape.

With reference to FIGS. 3A and 3B, multi-ply seals 100, 152 may include various quantities of plies. Although discussed in an embodiment that do not fall within the scope of the invention. in terms of seal 100 having two plies, it will be understood that the present invention is solely applied to seals having additional plies. In various embodiments, the plies, such as first ply 120 and second ply 130 of seal 100 and/or third ply 150 of seal 152, may be manufactured from sheet metal, such as titanium, titanium-based alloy, nickel, nickel-based alloy, aluminum, aluminum-based alloy, steel, stainless steel or other materials, which may be formed and folded into a serpentine shape including one or more legs 140 defined by one or more bends 142. For example, seal 100 may have a shape that resembles a "W." First ply 120 may be manufactured separately from second ply 130. First ply 120 may comprise a first portion of a sheet metal and second ply 130 may comprise a second portion of a sheet metal, wherein the first portion of the sheet metal and the second portion of the sheet metal are separate portions of sheet metal. First ply 120 has a first thickness T1 and second ply 130 has a second thickness T2. Each of first thickness T1 and second thickness T2 has between 0.0254 millimeters (mm) (0.001 inch) and 0.254 mm (0.01 inch), and may be between 0.076 mm (0.003 inch) and 0.254 mm (0.010 inch), and more specifically, between 0.076 mm (0.003 inch) and 0.15 mm (0.006 inch).

Seal 100 may include a metal, such as titanium, titanium-based alloy, nickel, nickel-based alloy, aluminum, aluminum-based alloy, steel, or stainless steel, or other materials. First ply 120 may include a first material and second ply 130 may include a second material. In various embodiments, first ply 120 may include the same material as second ply 130 and, in various embodiments, first ply 120 may include a different material than second ply 130. For example, first ply 120 may include a material having a lower coefficient of thermal expansion (CTE) relative to a material of second ply 130. The materials of first ply 120 and second ply 130 may be configured according to the operating conditions of the surrounding environment. For example, in engine section 80 (see FIG. 2A), first ply 120 having a full hoop configuration may comprise the inner diameter of seal 100 and may include a material capable of withstanding higher temperatures relative to second ply 130. Second ply 130 having a split hoop configuration may comprise an outer diameter of seal 100 and may include a material having greater wear resistance, strength, and/or spring stiffness. Thus, the materials of first ply 120 and second ply 130 may be selected to optimize the sealing effectiveness and wear resistance of seal 100.

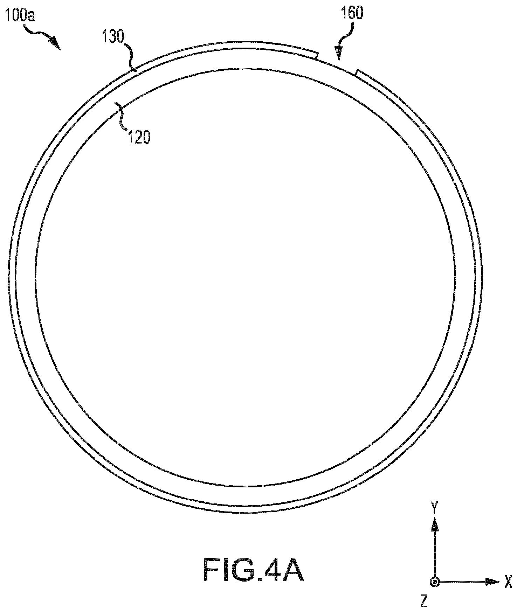

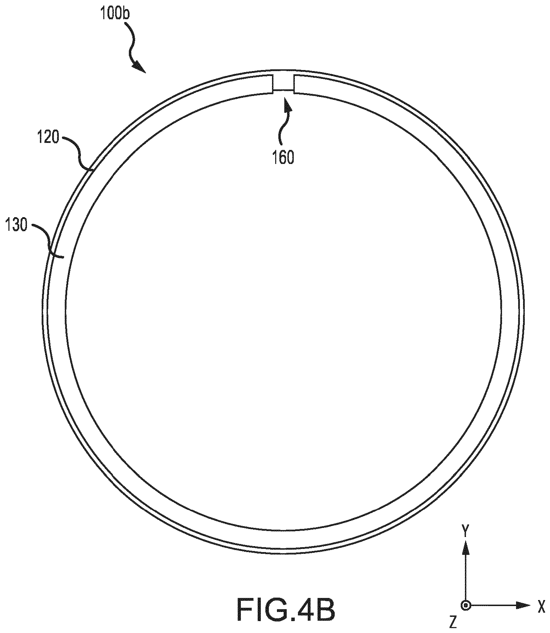

With reference to FIGS. 4A and 4B, a front axial view of seal configurations are shown in accordance with various embodiments that do not fall within the scope of the invention. In various embodiments, seal 100 may be annular or ring shaped. First ply 120 may be circumferentially continuous, and second ply 130 may be split, or circumferentially discontinuous. Stated differently, first ply 120 may include an annular shape, and second ply may include a circumferentially discontinuous annular shape having an axial split, shown by opening 160. FIG. 4A shows a configuration of seal 100a with second ply 130 disposed at an outer diameter of first ply 120. Second ply 130 may be bias fit onto the outer diameter surface of first ply 120. FIG. 4B shows a configuration of seal 100b with second ply 130 disposed at an inner diameter of first ply 120. Second ply 130 may be bias fit onto the inner diameter surface of first ply 120. Second ply 130 may be a split ring, an expanding ring, an interlocking split ring, or the like. In accordance with the scope of the invention, second ply 130 is a discontinuous ring, which is split at an opening 160. Opening 160 is defined by an axial split in second ply 130 extending from a first axial end 136 to a second axial end 138 of second ply 130 (see FIG. 3A). Opening 160 may extend completely through second ply 130 and may allow second ply 130 to expand and contract. Opening 160 may provide for ease of installation onto first ply 120 and may provide for a bias fit or snap fit. As a full hoop, first ply 120 provides support for second ply 130. Thus, seal 100 may be installed within an engine section that does not have a platform or a radial surface (for example, surface 112 in FIG. 2B) for supporting a seal.

Returning to FIG. 2B, seal 100 may include a full hoop portion, first ply 120, and a split hoop portion, second ply 130. By loading second ply 130 against first ply 120, which has a hoop stiffness, first ply 120 provides structural support for seal 100. Thus, first ply 120 and second ply 130 may not load radially inward or radially outward against an engine component, thereby reducing contact of the inner diameter and outer diameter of seal 100 with surfaces 112, 114. Reducing such contact results in less wear to seal 100, and thus, extends the operational life of seal 100.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

0042] As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A seal (152) for a gas turbine engine (20), comprising:
a first ply (120); and
a second ply (130) having a circumferentially discontinuous annular shape including an axial split extending from a first axial end to a second axial end of the second ply (130), the second ply (130) positioned directly adjacent to at least one of an inner diameter surface or an outer diameter surface of the first ply (120),
**characterised in that** the first ply (120) has a circumferentially continuous annular shape,
wherein the first ply (120) has a first thickness and the second ply (130) has a second thickness (T2), wherein each of the first thickness (T1) and the second thickness (T2) is between 0.0254 mm (0.001 inch) and 0.254 mm (0.01 inch),
the seal (152) further comprising a third ply (150) positioned adjacent to at least one of the first ply (120) or the second ply (130).

2. The seal (152) of claim 1, wherein each of the first thickness (T1) and the second thickness (T2) is between 0.076 mm (0.003 inch) and 0.254 mm (0.010 inch).

3. The seal (152) of claim 2, wherein each of the first thickness (T1) and the second thickness (T2) is between 0.076 mm (0.003 inch) and 0.15 mm (0.006 inch).

4. The seal (152) of claim 1, 2 or 3, wherein the first ply (120) and the second ply (130) form a seal (152) having a "W"-shaped cross-section.

5. The seal (152) of claim 4, wherein the second ply (130) is nested within the first ply (120) with an inner diameter surface of the second ply (130) in contact with the outer diameter surface of the first ply (120).

6. The seal (152) of any preceding claim, wherein the third ply has a circumferentially discontinuous annular shape.

7. The seal (152) of any preceding claim, wherein the first ply (120) comprises a first portion of a sheet metal and the second ply (130) comprises a second portion of a sheet metal.

8. The seal (152) of any preceding claim, wherein the first ply (120) comprises a first material and the second ply (130) comprises a second material, and wherein at least one of the first material or the second material comprises a nickel-based alloy.

9. The seal (152) of claim 8, wherein the first material and the second material comprise the same material.

10. An engine section of a gas turbine engine (20), comprising:
a first engine component;
a second engine component disposed adjacent to the first engine component; and
a seal (152) as claimed in any preceding claim, the seal (152) being disposed between the first engine component and the second engine component.

11. The engine section of claim 10, wherein the second ply (130) is mechanically loaded against the at least one of an inner diameter surface or an outer diameter surface of the first ply (120).

12. The engine section of claim 10 or 11 when dependent on claim 8,
wherein the second material has a greater wear resistance than the first material.

13. A gas turbine engine (20), comprising:
an engine section (80) comprising at least one of a compressor section (24) or a turbine section (28), the engine section (80) comprising:
a blade outer air seal,
a vane (72) adjacent to the blade outer air seal, and
a seal (152) as claimed in any of claims 1 to 7, the seal (152) disposed between the blade outer air seal and the vane (72).

14. The gas turbine engine (20) of claim 13, wherein the second ply (130) is mechanically loaded against the outer diameter surface of the first ply (120).

## Patentansprüche

1. Dichtung (152) für ein Gasturbinentriebwerk (20), umfassend:
eine erste Lage (120); und
eine zweite Lage (130), welche eine umlaufend diskontinuierliche ringförmige Gestalt aufweist, welche eine axiale Teilung beinhaltet, welche sich von einem ersten axialen Ende zu einem zweiten axialen Ende der zweiten Lage (130) erstreckt, wobei die zweite Lage (130) direkt benachbart zu mindestens einer von einer Innendurchmesserfläche oder einer Außendurchmesserfläche der ersten Lage (120) positioniert ist,
**dadurch gekennzeichnet, dass** die erste Lage (120) eine umlaufend kontinuierliche ringförmige Gestalt aufweist,
wobei die erste Lage (120) eine erste Dicke aufweist und die zweite Lage (130) eine zweite Dicke (T2) aufweist, wobei jede der ersten Dicke (T1) und der zweiten Dicke (T2) zwischen 0,0254 mm (0,001 Zoll) und 0,254 mm (0,01 Zoll) beträgt,
wobei die Dichtung (152) ferner eine dritte Lage (150) umfasst, welche benachbart zu mindestens einer der ersten Lage (120) oder der zweiten Lage (130) positioniert ist.

2. Dichtung (152) nach Anspruch 1, wobei jede der ersten Dicke (T1) und der zweiten Dicke (T2) zwischen 0,076 mm (0,003 Zoll) und 0,254 mm (0,010 Zoll) beträgt.

3. Dichtung (152) nach Anspruch 2, wobei jede der ersten Dicke (T1) und der zweiten Dicke (T2) zwischen 0,076 mm (0,003 Zoll) und 0,15 mm (0,006 Zoll) beträgt.

4. Dichtung (152) nach Anspruch 1, 2 oder 3, wobei die erste Lage (120) und die zweite Lage (130) eine Dichtung (152) bilden, welche einen Querschnitt in der Gestalt eines "W"s aufweist.

5. Dichtung (152) nach Anspruch 4, wobei die zweite Lage (130) in der ersten Lage (120) in einer Innendurchmesserfläche der zweiten Lage (130) eingebettet ist, welche die Außendurchmesserfläche der erste Lage (120) berührt.

6. Dichtung (152) nach einem der vorstehenden Ansprüche, wobei die dritte Lage eine umlaufend diskontinuierliche kreisförmige Gestalt aufweist.

7. Dichtung (152) nach einem der vorstehenden Ansprüche, wobei die erste Lage (120) einen ersten Teil eines Metallblechs umfasst und die zweite Lage (130) einen zweiten Teil eines Metallblechs umfasst.

8. Dichtung (152) nach einem der vorstehenden Ansprüche, wobei die erste Lage (120) ein erstes Material umfasst und die zweite Lage (130) ein zweites Material umfasst, und wobei mindestens eines von dem ersten Material oder dem zweiten Material eine nickelbasierte Legierung umfasst.

9. Dichtung (152) nach Anspruch 8, wobei das erste Material und das zweite Material das gleiche Material umfassen.

10. Triebwerksabschnitt eines Gasturbinentriebwerks (20), umfassend:
eine erste Triebwerkskomponente;
eine zweite Triebwerkskomponente, welche benachbart zu der ersten Triebwerkskomponente angeordnet ist; und
eine Dichtung (152) nach einem der vorstehenden Ansprüche, wobei die Dichtung (152) zwischen der ersten Triebwerkskomponente und der zweiten Triebwerkskomponente angeordnet ist.

11. Triebwerksabschnitt nach Anspruch 10, wobei die zweite Lage (130) eine mechanisch Belastung auf die mindestens eine einer Innendurchmesserfläche oder einer Außendurchmesserfläche der ersten Lage (120) ausübt.

12. Triebwerksabschnitt nach Anspruch 10 oder 11, wenn von Anspruch 8 abhängig,
wobei das zweite Material eine größere Verschleißbeständigkeit aufweist als das erste Material.

13. Gasturbinentriebwerk (20), umfassend:
einen Triebwerksabschnitt (80), umfassend mindestens einen von einem Verdichterabschnitt (24) oder einem Turbinenabschnitt (28), wobei der Triebwerksabschnitt (80) Folgendes umfasst:
eine Laufschaufelaußenluftdichtung,
eine Leitschaufel (72) benachbart zu der Laufschaufelaußenluftdichtung, und
eine Dichtung (152) nach einem der Ansprüche 1 bis 7, wobei die Dichtung (152) zwischen der Laufschaufelaußenluftdichtung und der Leitschaufel (72) angeordnet ist.

14. Gasturbinentriebwerk (20) nach Anspruch 13, wobei die zweite Lage (130) eine mechanische Belastung auf Außendurchmesserfläche der erste Lage (120) ausübt.

## Revendications

1. Joint (152) pour un moteur à turbine à gaz (20), comprenant :
un premier pli (120) ; et
un deuxième pli (130) ayant une forme annulaire circonférentiellement discontinue incluant une fente axiale s'étendant d'une première extrémité axiale à une seconde extrémité axiale du deuxième pli (130), le deuxième pli (130) étant positionné directement adjacent à au moins une d'une surface de diamètre intérieur ou une surface de diamètre extérieur du premier pli (120),
**caractérisé en ce que** le premier pli (120) a une forme annulaire circonférentiellement continue,
dans lequel le premier pli (120) a une première épaisseur et le deuxième pli (130) a une seconde épaisseur (T2), dans lequel chacune de la première épaisseur (T1) et de la seconde épaisseur (T2) est comprise entre 0,0254 mm (0,001 millièmes de pouce) et 0,254 mm (0,01 millièmes de pouce),
le joint (152) comprenant en outre un troisième pli (150) positionné adjacent à au moins un du premier pli (120) ou du deuxième pli (130).

2. Joint (152) selon la revendication 1, dans lequel chacune de la première épaisseur (T1) et de la seconde épaisseur (T2) est comprise entre 0,076 mm (0,003 millièmes de pouce) et 0,254 mm (0,010 millièmes de pouce).

3. Joint (152) selon la revendication 2, dans lequel chacune de la première épaisseur (T1) et de la seconde épaisseur (T2) est comprise entre 0,076 mm (0,003 millièmes de pouce) et 0,15 mm (0,006 millièmes de pouce).

4. Joint (152) selon la revendication 1, 2 ou 3, dans lequel le premier pli (120) et le deuxième pli (130) forment un joint (152) ayant une section transversale en forme de « W ».

5. Joint (152) selon la revendication 4, dans lequel le deuxième pli (130) est emboîté à l'intérieur du premier pli (120) avec une surface de diamètre intérieur du deuxième pli (130) en contact avec la surface de diamètre extérieur du premier pli (120).

6. Joint (152) selon une quelconque revendication précédente, dans lequel le troisième pli a une forme annulaire circonférentiellement discontinue.

7. Joint (152) selon une quelconque revendication précédente, dans lequel le premier pli (120) comprend une première partie d'une tôle et le deuxième pli (130) comprend une seconde partie d'une tôle.

8. Joint (152) selon une quelconque revendication précédente, dans lequel le premier pli (120) comprend un premier matériau et le deuxième pli (130) comprend un second matériau, et dans lequel au moins un du premier matériau ou du second matériau comprend un alliage à base de nickel.

9. Joint (152) selon la revendication 8, dans lequel le premier matériau et le second matériau comprennent le même matériau.

10. Section de moteur d'un moteur à turbine à gaz (20), comprenant :
un premier composant de moteur ;
un second composant de moteur disposé adjacent au premier composant de moteur ; et
un joint (152) selon une quelconque revendication précédente, le joint (152) étant disposé entre le premier composant de moteur et le second composant de moteur.

11. Section de moteur selon la revendication 10, dans laquelle le second pli (130) est chargé mécaniquement contre l'au moins une d'une surface de diamètre intérieur ou d'une surface de diamètre extérieur du premier pli (120).

12. Section de moteur selon la revendication 10 ou 11 lorsqu'elle dépend de la revendication 8,
dans laquelle le second matériau a une plus grande résistance à l'usure que le premier matériau.

13. Moteur à turbine à gaz (20), comprenant :
une section de moteur (80) comprenant au moins une d'une section de compresseur (24) ou d'une section de turbine (28), la section de moteur (80) comprenant :
un joint à air extérieur de pale,
une aube (72) adjacente au joint à air extérieur de pale, et
un joint (152) selon l'une quelconque des revendications 1 à 7, le joint (152) disposé entre le joint à air extérieur de pale et l'aube (72).

14. Moteur à turbine à gaz (20) selon la revendication 13, dans lequel le second pli (130) est chargé mécaniquement contre la surface de diamètre extérieur du premier pli (120).
